# EUROPÄISCHE PATENTSCHRIFT

(11) **EP 1 561 165 B1**
(45) Veröffentlichungstag und Bekanntmachung des Hinweises auf die Patenterteilung: **09.05.2007**
(21) Anmeldenummer: 03767420.7
(22) Anmeldetag: 12.11.2003
(51) Int. Cl.: G06F 11/00

(54) **STEUEREINHEIT ZUR AUSLÖSUNG EINES INSASSENSCHUTZMITTELS IN EINEM KRAFTFAHRZEUG UND VERFAHREN ZUR ÜBERWACHUNG DER ORDNUNGSGEMÄSSEN FUNKTION EINER VORZUGSWEISE SOLCHEN STEUEREINHEIT**
CONTROL UNIT FOR ACTIVATING A PROTECTION MECHANSIM FOR PASSENGERS OF A MOTOR VEHICLE AND METHOD FOR MONITORING THE PROPER OPERATION OF SUCH A CONTROL UNIT
UNITE DE COMMANDE DESTINEE A DECLENCHER UN SYSTEME DE PROTECTION DE PASSAGERS D'UN VEHICULE MOTORISE ET METHODE DE CONTROLE DU BON FONCTIONNEMENT D'UNE TELLE UNITE DE COMMANDE

(30) Priorität: 14.11.2002 DE 10252990
(43) Veröffentlichungstag der Anmeldung: 10.08.2005
(73) Patentinhaber: SIEMENS AKTIENGESELLSCHAFT, 80333 München (DE)
(72) Erfinder: GRASSHOFF, Helge, 93049 Regensburg (DE); MACHIDERA, Koutaro, Atsugi city, Tokyo 243-0814 (JP)
(86) Internationale Anmeldenummer: PCT/DE2003/003737
(87) Internationale Veröffentlichungsnummer: WO 2004/043737

(56) Entgegenhaltungen:
- EP-A- 0 575 854
- JP-A- 11 330 931
- US-A- 4 881 227

## Beschreibung

Steuereinheit zur Auslösung eines Insassenschutzmittels in einem Kraftfahrzeug und Verfahren zur Überwachung der ordnungsgemäßen Funktion einer vorzugsweise solchen Steuereinheit

Die Erfindung betrifft eine Steuereinheit zur Auslösung eines Insassenschutzmittels in einem Kraftfahrzeug und ein Verfahren zur Überwachung der ordnungsgemäßen Funktion einer vorzugsweise solchen Steuereinheit. Die Steuereinheit umfasst dabei eine erste Recheneinheit, eine zweite Recheneinheit und eine Auslöseeinheit, die jeweils asynchron zueinander getaktet sind. Des Weiteren umfasst die Steuereinheit ein erstes und ein zweites logisches UND - Gatter. Die erste und die zweite Recheneinheit umfassen jeweils eine Pulszahlvergleichereinheit und einen Rücksetzer.

Jeweils einem logischen UND - Gatter ist eingangsseitig das Taktsignal der ihm jeweils zugeordneten Recheneinheit zugeführt und des Weiteren das Taktsignal der Auslöseeinheit. Der Signalausgang jeweils eines logischen UND - Gatters wird dem Eingang der Pulszahlvergleichereinheit jeweils einer Recheneinheit zugeführt und der Ausgang der Pulszahlvergleichereinheit dem Eingang des jeweils zugehörigen Rücksetzers einer Recheneinheit.

Der Rücksetzer jeder Recheneinheit ist mit dem Reseteingang der jeweils anderen Recheneinheit verbunden, so dass der zugehörige Rücksetzer die jeweils andere Recheneinheit dann zurücksetzt, wenn die zugehörige Pulszahlvergleichereinheit eine unzulässige Anzahl von Pulsen pro Zeiteinheit im Ausgangssignal des jeweils mit ihr verbundenen UND - Gatters erkennt.

**JP11330931** beschreibt eine Schaltung mit drei asynchronen Recheneinheiten, die jeweils Fehler in den Taktsignalen der anderen Einheiten erkennen können. Jede Recheneinheit liest und wertet zur Fehlererkennung den Stand eines Zählers in den jeweils anderen Einheiten aus. Fehlersignale werden einer zusätzlichen "Supervisor-Einheit" übermittelt.

Es ist Stand der Technik, mithilfe von Schaltungen Funktionsabläufe in Recheneinheiten zu überwachen und bei erkannten Fehlern in den Funktionsabläufen die fehlerhaften Rechenein-heiten zurückzusetzen. In den Druckschriften DE 100 56 408 C1, DE 100 30 991 A1, DE 100 49 440 A1 und DE 40 39 355 A1 wird hierzu eine sogenannte watchdog-Schaltung verwendet, die die von der Recheneinheit ausgesendeten Impulse hinsichtlich ihrer Impulslänge, Pausenlänge oder der Anzahl der Impulse pro Zeiteinheit auswertet.

In vielen Ansteuerungssystemen wird heutzutage neben einer ersten Recheneinheit eine zweite Recheneinheit vorgesehen.
Die zweite Recheneinheit dient dabei zumeist als Sicherheitsrecheneinheit der Überwachung der ordnungsgemäßen Funktionsweise der ersten Recheneinheit und gegebenenfalls, bei deren Ausfall, einer zumindest teilweisen Übernahme der Rechen- und Ansteuerfunktionen der ersten Recheneinheit.

Besonders wichtig ist der Einsatz solcher Sicherheitsrecheneinheiten in Verbindung mit einer ersten Hauptrecheneinheit bei Ansteuerungssystemen, deren Ausfall zumindest die Gefahr einer Verletzung von Personen mit sich bringen würde. Ein solches sicherheitsrelevantes Ansteuerungssystem ist beispielsweise die Steuereinheit zur Ansteuerung eines Insassenschutzmittels in einem Kraftfahrzeug. Dort berechnet die Hauptrecheneinheit den Zündzeitpunkt für die Auslösung des geeigneten Insassenschutzmittels, das im Falle eines Aufprallunfalls einem Fahrzeuginsassen den bestmöglichen Schutz vor Verletzungen bietet. Im Anschluss an die Berechnung des besten Zündzeitpunktes gibt die Hauptrecheneinheit die Auslösung des geeigneten Insassenschutzmittels, beispielsweise eines Fahrerairbags, frei.

Schon bei einem nur teilweisen Ausfall der Rechenleistung der Hauptrecheneinheit kann eine rechtzeitige Auslösung des geeigneten Insassenschutzmittels durch die Steuereinheit nicht mehr gewährleistet werden. Aus diesem Grund muss die entscheidende Funktionalität der ersten Recheneinheit durch die, zweite Recheneinheit, die Sicherheitsrecheneinheit, übernommen werden. Dazu muss die Sicherheitsrecheneinheit zunächst eine mögliche Fehlfunktion der ersten Recheneinheit erkennen, um in einem zweiten Schritt die erste Recheneinheit zurückzusetzen oder sogar vollständig abzuschalten und gegebenenfalls die Aufgaben der ersten Recheneinheit zumindest teilweise zu übernehmen.

Ein solches Zwei-Rechner-System in einer sicherheitsrelevanten Anwendung in einem Kraftfahrzeug ist beispielsweise in der deutschen Offenlegungsschrift DE 37 00 986 A1 beschrieben. Die dort gezeigten Prozessoren überwachen sich gleichberechtigt. Dabei gibt jeweils eine Recheneinheit ein watchdog - Signal 33, 37 aus, das in der jeweils anderen Recheneinheit durch eine watchdog - Erkennung 14, 22 überprüft wird. Empfängt die jeweils eine Recheneinheit von der jeweils anderen Recheneinheit ein fehlerhaftes watchdog - Signal 33, 35 so gibt die jeweils ordnungsgemäß arbeitende Recheneinheit ein Reset-Signal 40, 36 an die fehlerhafte andere Recheneinheit aus.

Ähnliche Ansteuerungssysteme mit je zwei Recheneinheiten in sicherheitskritischer Anwendung in Kraftfahrzeugen sind auch aus den Druckschriften DE 101 51 012 A1 und DE 40 04 709 C2 bekannt, wobei auch hier die gegenseitige Überwachung der zwei Recheneinheiten mithilfe je einer watchdog-Erkennung in jeder Recheneinheit erfolgt.

Die gegenseitige Überwachung der korrekten Funktionsweise von Recheneinheiten durch eine solche watchdog - Schaltung ist jedoch oftmals nur sehr langsam. Gerade bei Insassenschutzsystemen ist es jedoch sehr wichtig, eine Fehlfunktion einer Recheneinheit innerhalb einer Steuereinheit eines Insassenschutzsystems sehr schnell und zuverlässig zu erkennen, um unverzüglich Maßnahmen zur Begrenzung möglicher Gefahren für einen Fahrzeuginsassen einleiten zu können.

Die Aufgabe der vorliegenden Erfindung ist es deshalb, die notwendigen technischen Voraussetzungen zu schaffen, um eine sehr schnelle Erkennung der Fehlfunktion mindestens einer Recheneinheit innerhalb einer Steuereinheit eines Insassenschutzmittels für ein Kraftfahrzeug zu schaffen.

Die Aufgabe wird gelöst durch eine Steuereinheit gemäß Anspruch 1.

Die erfindungsgemäße Steuereinheit weist neben der Hauptrecheneinheit, der ersten Recheneinheit, auch eine Sicherheitsrecheneinheit, die zweite Recheneinheit, auf sowie eine Auslöseeinheit zur Auslösung des Insassenchutzmittels, beispielsweise eines Airbags. Die erste Recheneinheit, die zweite Recheneinheit und die Auslöseeinheit werden durch einen internen oder externen Taktgeber jeweils asynchron zueinander getaktet.

Die erste Recheneinheit umfasst eine erste Pulszahlvergleichereinheit und einen ersten Rücksetzer, die zweite Recheneinheit eine zweite Pulszahlvergleichereinheit und einen zweiten Rücksetzer. Jeweils zugeordnet zur ersten bzw. zweiten Recheneinheit weist die Steuereinheit des Weiteren ein erstes und ein zweites logisches UND - Gatter auf.

Dem Eingang des ersten logischen UND - Gatters ist sowohl das Taktsignal der ersten Recheneinheit als auch das Taktsignal der Auslöseeinheit zugeführt, sein Ausgang hingegen ist mit dem Eingang der zweiten Pulszahlvergleichereinheit verbunden. Der Ausgang der zweiten Pulszahlvergleichereinheit ist mit einem Eingang des zweiten Rücksetzers verbunden, dessen Ausgang wiederum dem Reset-Eingang der ersten Recheneinheit zugeführt ist.

Die Beschaltung des ersten logischen UND - Gatters der Steuereinheit ist derart, dass der zweite Rücksetzer die erste Recheneinheit durch Ausgabe eines Reset-Signals zurücksetzt, wenn die zweite Pulszahlvergleichereinheit eine unzulässige Anzahl von Pulsen pro Zeiteinheit im Ausgangssignal des ersten UND - Gatters erkennt.

Die Beschaltung des zweiten logischen UND - Gatters ergibt sich analog aus der Beschaltung des ersten logischen UND - Gatters, wenn man die erste Recheneinheit durch die zweite Recheneinheit ersetzt und ebenso die erste gegen die zweite Pulszahlvergleichereinheit, den ersten Rücksetzer gegen den zweiten Rücksetzer und den Reset-Eingang der ersten Recheneinheit gegen den Reset-Eingang der zweiten Recheneinheit.

Folglich ist die Beschaltung des zweiten UND - Gatters derart, dass der erste Rücksetzer die zweite Recheneinheit durch die Ausgabe eines Reset-Signals zurücksetzt, wenn die erste Pulszahlvergleichereinheit eine unzulässige Anzahl von Pulsen pro Zeiteinheit im Ausgangssignal des zweiten UND - Gatters erkennt.

Als Pulszahlvergleichereinheit einer Recheneinheit der erfindungsgemäßen Steuereinheit wird im Zusammenhang vorliegend beschriebener Erfindung eine Funktionseinheit bezeichnet, die beispielsweise eine Anzahl von High - Pegeln pro Zeiteinheit einer Pulsfolge zählt und mit einem vorher festgelegten Vergleichswert vergleicht. In Abhängigkeit von diesem Vergleich kann die Pulszahlvergleichereinheit unterschiedliche Steuersignale ausgeben.

Selbstverständlich könnte eine Pulszahlvergleichereinheit alternativ auch eine Anzahl von Low - Pegeln oder eine Anzahl von Pegelwechseln pro Zeiteinheit einer Pulsfolge zählen.

In einer vorteilhaften Weiterbildung weist die Steuereinheit ein erstes und ein zweites logisches ODER - Gatter auf, wobei das zweite ODER - Gatter eingangsseitig mit dem Ausgang des zweiten Rücksetzers und ausgangsseitig mit dem Reset-Eingang der ersten Recheneinheit verbunden ist und entsprechend das erste ODER - Gatter eingangsseitig mit dem ersten Rücksetzer und ausgangsseitig mit dem Reset-Eingang der zweiten Recheneinheit verbunden ist. Dies bietet den Vorteil, dass einem jeweils weiteren Eingang der logischen ODER - Gatter weitere Reset-Signale anderer Schaltungsteile der Steuereinheit zugeführt werden können, so dass eine Recheneinheit nicht allein durch die Entscheidung der jeweils anderen Recheneinheit zurückgesetzt werden kann, sondern auch durch eine weitere Entscheidung einer weiteren Funktionseinheit der Steuereinheit.

In einer weiteren vorteilhaften Ausführungsform ist der erste Rücksetzer der ersten Recheneinheit oder der zweite Rücksetzer der zweiten Recheneinheit mit einem Reset-Eingang der Auslöseeinheit verbunden. So kann der erste Rücksetzer bzw. der zweite Rücksetzer bei einer festgestellten Fehlfunktion der zweiten bzw. ersten Recheneinheit nicht nur die jeweils andere Recheneinheit zurücksetzen, sondern auch die Auslöseeinheit. Dies bietet eine zusätzliche Sicherheit hinsichtlich einer korrekten Funktionsweise des Insassenschutzsystems, da bei einer Fehlfunktion zumindest einer der beiden Recheneinheiten auch sicher die Auslöseeinheit abgeschaltet wird. Dadurch wird eine möglicherweise gefährliche Auslösung des Insassenschutzmittels sicher verhindert.

Ein besonders hohes Maß an Sicherheit besitzt die Steuereinheit folglich vor allem auch dann, wenn beide Rücksetzer der Recheneinheit mit einem Reset-Eingang der Auslöseeinheit verbunden sind, so dass beide Recheneinheiten ggf. die Auslöseeinheit zurücksetzen können. Weiterhin von Vorteil ist es dabei, wenn die Steuereinheit ein drittes logisches ODER - Gatter aufweist, das eingangsseitig die Signale der Rücksetzer beider Recheneinheiten empfängt und ausgangsseitig mit dem Reset-Eingang der Auslöseeinheit verbunden ist.

In einer weiteren vorteilhaften Ausführungsform der Erfindung weist die Steuereinheit ein drittes UND - Gatter auf, dem eingangsseitig die Taktsignale der ersten und der zweiten Recheneinheit zugeführt sind und dessen Signalausgang sowohl der ersten als auch der zweiten Pulszahlvergleichereinheit der ersten bzw. zweiten Recheneinheit zugeführt sind. Stellt die erste bzw. die zweite Pulszahlvergleichereinheit ein fehlerhaftes Ausgangssignal des dritten UND - Gatters fest, so meldet sie die Störung an den ihr jeweils zugeordneten Rücksetzer, der die jeweils andere Recheneinheit und ggf. auch die Auslöseeinheit zurücksetzt.

Weiterhin ist es von Vorteil, wenn die Steuereinheit eine sogenannte erste watchdog - Schaltung aufweist. Dafür ist ein erster watchdog - Eingang der Auslöseeinheit mit einem watchdog - Ausgang der ersten Recheneinheit verbunden und ein Recheneinheitsrücksetzungsausgang der Auslöseeinheit direkt oder mittelbar mit der ersten Recheneinheit. Stellt die Auslöseeinheit einen Fehler im watchdog - Signal des watchdog - Ausgangs der ersten Recheneinheit fest, so gibt die Auslöseeinheit ein Recheneinheitsrücksetzungssignal direkt oder mittelbar an die erste Recheneinheit aus. Eine solche redundante Sicherheitsschaltung in Form einer ersten watchdog - Schaltung erhöht zusätzlich die sichere Abschaltung einer fehlerhaft arbeitenden ersten Recheneinheit innerhalb der Steuereinheit des Insassenschutzsystems.

Eine analoge zweite watchdog - Schaltung für die Rücksetzung einer fehlerhaften zweiten Recheneinheit durch die Auslöseeinheit bringt zusätzliche Sicherheit, vor allem dann, wenn die zweite Recheneinheit gleichberechtigt zum Funktionieren des Sicherheitssystems beiträgt.

Ein zur Lösung der Aufgabe geeignetes Verfahren ist im unabhängigen Patentanspruch 7 angegeben.

Das erfindungsgemäße Verfahren dient zur Überwachung der ordnungsgemäßen Funktion einer erfindungsgemäßen Steuereinheit zur Auslösung eines Insassenschutzmittels in einem Kraftfahrzeug. Der Ablauf eines solchen erfindungsgemäßen Verfahrens ist anhand der weiter oben in ihrem funktionellen Zusammenhang erläuterten Merkmale einer erfindungsgemäßen Vorrichtung bereits ausreichend beschrieben. Um an dieser Stelle Wiederholungen zu vermeiden, soll hier nur auf die erfindungsgemäßen Verfahrensmerkmale eingegangen werden, die über den Rahmen des bereits Geschilderten hinausgehen.

Zum Beispiel ist es unerheblich für ein erfindungsgemäßes Verfahren, auf welche Art die Taktsignale der beiden Recheneinheiten und der Auslöseeinheit zu verschiedentlich miteinander logisch verknüpften Signalen kombiniert werden. Bei der oben beschriebenen erfindungsgemäßen Vorrichtung wird eine solche logische Verknüpfungsfunktion über logische Und - Gatter erreicht, die - wie auch die ebenfalls offenbarten Oder - Gatter - sowohl als elektrische Bauelemente ausgestaltet sein können, aber auch als Programmabläufe innerhalb eines Mikroprozessors. Entscheidend für ein erfindungsgemäßes Verfahren ist es vielmehr, dass eine logische Verknüpfung der genannten Taktsignale so erfolgt, dass eine Pulsfolge erzeugt wird, die nachfolgend durch Zählen der Einzelpulse und Vergleichen des ermittelten Werts mit einem Sollwert insofern bewertet werden kann, ob eine der getakteten Funktionseinheiten der sie enthaltenden Steuereinheit funktionsgerecht arbeitet oder nicht.

Vorteilhafterweise werden die als fehlerhaft identifizierten Funktionseinheiten dabei zumindest einmal zurückgesetzt, damit einer fehlerhaft arbeitenden Funktionseinheit der Steuereinheit durch einen Neustart Gelegenheit gegeben wird, einen vorgesehenen Betriebszustand zu erreichen. Kann ein solcher ordnungsgemäßer Betriebszustand nach einem einmaligen oder mehrmaligen Zurücksetzen der Funktionseinheit nicht herbeigeführt werden, so wird zumindest der fehlerhafte Teil des Steuergeräts deaktiviert und, falls möglich, durch eine andere Funktionseinheit des Steuergeräts ersetzt. Ggf. wird die gesamte Steuereinheit deaktiviert.

Die teilweise oder vollständige Deaktivierung des Steuergeräts des Insassenschutzsystems wird dann einem Fahrzeuginsassen entsprechend angezeigt, beispielsweise durch das Aufleuchten einer Warnlampe, üblicherweise in der Fahrzeugarmatur.

Im Folgenden wird die Erfindung anhand von mehreren Ausführungsbeispielen beschrieben.

Es zeigen:
- Figur 1: eine erfindungsgemäße Steuereinheit mit zwei UND - Gattern (AND1, AND2),
- Figur 2: eine erfindungsgemäße Steuereinheit mit drei UND - Gattern (AND1, AND2, AND3),
- Figur 3: ein schematisches Laufzeitdiagramm der Taktsignale (clk1, clk2, clk3) der ersten und der zweiten Recheneinheit (R1, R2) sowie der Auslöseeinheit (AE) und den daraus zusammengesetzten Taktsignalen (clk13, clk23, clk12) am Ausgang des ersten, zweiten und dritten UND - Gatters (AND1, AND2, AND3),
- Figur 4: ein schematisches Laufzeitdiagramm der Taktsignale (clk1, clk2) der ersten und der zweiten Recheneinheit (R1, R2) und des zugehörigen Ausgangssignals (clk12) des dritten UND - Gatters (AND3) bei synchroner Taktung der beiden Recheneinheiten (R1, R2) und
- Figur 5: eine schematische Entscheidungsmatrix zur Zurücksetzung der Recheneinheiten (R1, R2) oder der Auslöseeinheit (AE) einer erfindungsgemäßen Steuereinheit.

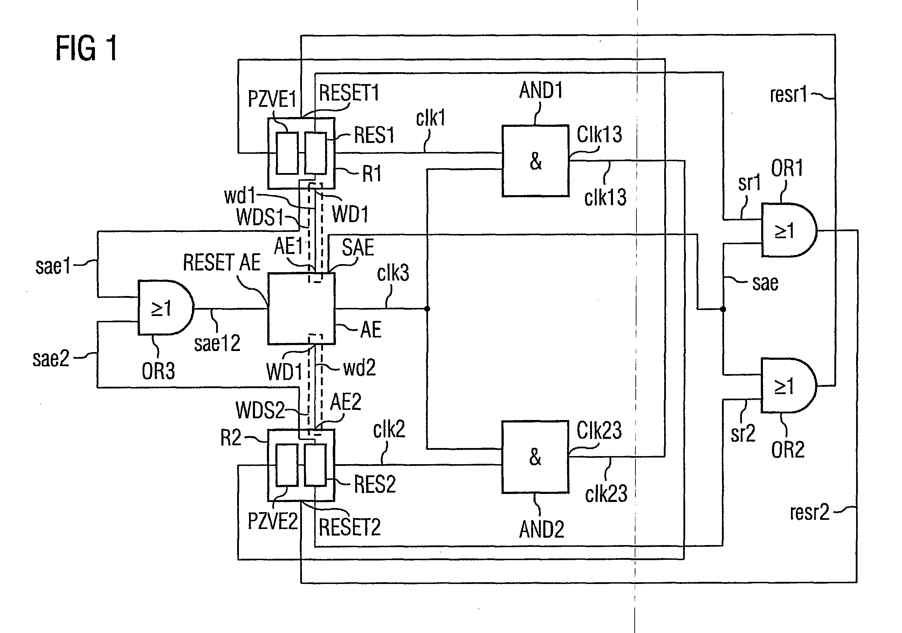

Figur 1 zeigt eine erfindungsgemäße Steuereinheit mit einer ersten und zweiten Recheneinheit R1, R2 und einer Auslöseeinheit AE sowie einem ersten und einem zweiten UND - Gatter AND1, AND2 und einem ersten, zweiten und dritten ODER - Gatter OR1, OR2, OR3.

Dem ersten Signaleingang des ersten UND - Gatters AND1 ist das Taktsignal clk1 der ersten Recheneinheit R1 zugeführt. Dem zweiten Signaleingang des ersten UND - Gatters AND1 ist das Taktsignal clk3der Auslöseeinheit AE zugeführt. Am Signalausgang des ersten UND - Gatters AND1 liegt ein logisches Summensignal clk13 der beiden eingangsseitig zugeführten Taktsignale clk1 und clk3 vor, das einer Pulszahlvergleichereinheit PZVE2 der zweiten Recheneinheit R2 zugeführt wird. Der Signalausgang der zweiten Pulszahlvergleichereinheit PZVE2 ist mit einem zweiten Rücksetzer RES2 innerhalb der zweiten Recheneinheit R2 verbunden. Der zweite Rücksetzer RES2 ist ausgangsseitig mit einem Signaleingang des zweiten ODER - Gatters OR2 verbunden. Der Signalausgang des zweiten ODER - Gatters OR2 wiederum ist mit dem ersten Reset-Eingang RESET1 der ersten Rechnereinheit R1 verbunden.

Analog zur Beschaltung des ersten UND - Gatters AND1 ist auch das zweite UND - Gatter beschaltet. Dem ersten Signaleingang des zweiten UND - Gatters AND2 ist das Taktsignal clk2 der zweiten Recheneinheit R2 zugeführt, seinem zweiten Signaleingang ebenfalls das Taktsignal clk3 der Auslöseeinheit AE. Das Ausgangssignal clk23 des zweiten logischen UND - Gatters AND2 ist ein logisches Summensignal der beiden eingangsseitig zugeführten Taktsignale clk2 und clk3 und ist der ersten Pulszahlvergleichereinheit PZVE1 der ersten Recheneinheit R1 zugeführt. Die erste Pulszahlvergleichereinheit PZVE1 führt ein Ausgangssignal zum ersten Rücksetzer RES1, der ausgangsseitig mit dem Signaleingang des ersten ODER - Gatters OR1 verbunden ist. Der Signalausgang des ersten ODER - Gatters OR1 ist dem Reset-Eingang RESET2 der zweiten Recheneinheit R2 zugeführt.

Ein jeweils zweiter Signalausgang des ersten Rücksetzers RES1 bzw. des zweiten Rücksetzers RES2 ist mit jeweils einem Signaleingang eines dritten ODER - Gatters OR3 verbunden. Der Signalausgang des dritten ODER - Gatters OR3 ist mit einem Reset-Eingang RESETAE der Auslöseeinheit AE verbunden.

Des Weiteren ist von einem watchdog - Ausgang WD1 der ersten Recheneinheit R1 ein erstes watchdog - Signal wd1 einem ersten watchdog - Eingang AE1 der Auslöseeinheit AE zugeführt. Analog ist auch ein zweites watchdog - Signal wd2 von einem zweiten watchdog - Ausgang WD2 der zweiten Recheneinheit R2 einem zweiten watchdog - Eingang AE2 der Auslöseeinheit AE zugeführt.

Schließlich ist noch ein Recheneinheitsrücksetzungsausgang SAE der Auslöseeinheit AE mit den jeweils zweiten Signaleingängen des ersten ODER - Gatters OR1 und des zweiten ODER - Gatters OR 2 verbunden.

Die in der Figur 1 dargestellte Schaltung funktioniert wie folgt:

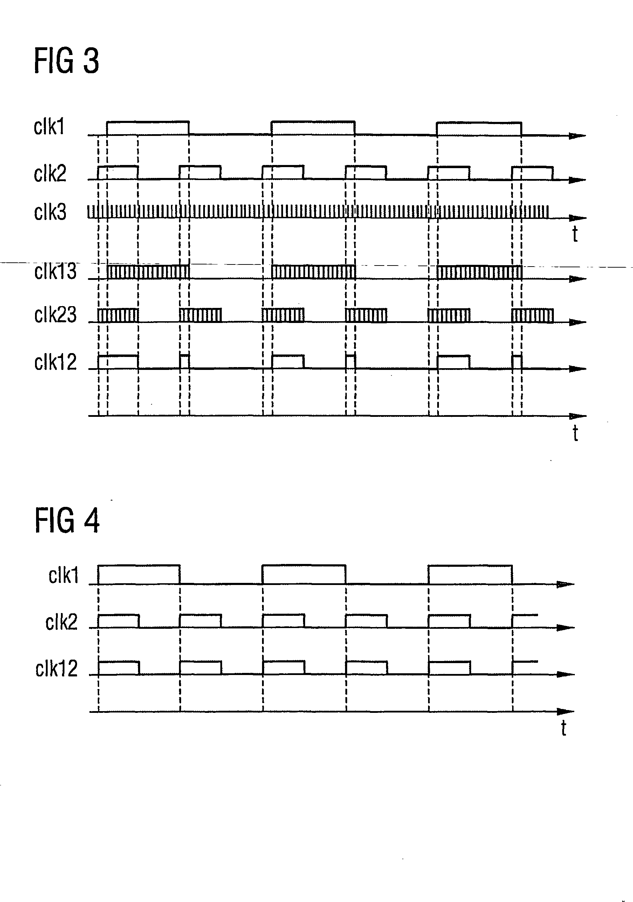

Das erste UND - Gatter AND1 erzeugt ausgangsseitig ein modifiziertes Taktsignal clk13 aus den beiden eingangsseitig zugeführten Taktsignalen der ersten Recheneinheit clk1 und des Taktsignals der Auslöseeinheit clk3. Wie in Figur 3 dargestellt weist das Ausgangssignal clk13 des ersten UND - Gatters AND1 nur dann einen logischen High - Pegel auf, wenn die eingangsseitig zugeführten Taktsignale clk1 und clk3 gleichzeitig ebenfalls einen logischen High - Pegel aufweisen. Da im dargestellten Ausführungsbeispiel der Figur 3 das Taktsignal clk1 der ersten Recheneinheit R1 mit einer Taktfrequenz von beispielsweise 1 kHz eine wesentlich größere Taktperiode als das Taktsignal clk3 der Auslöseeinheit AE mit einer Taktfrequenz von beispielsweise 50 kHz besitzt, weist das modifizierte Taktsignal clk13 eine wiederkehrende Pulsfolge mit einer Periode des ersten Taktsignals clk1 auf, mit Einzelpulsen innerhalb der Pulsfolgen mit einer Periodizität des Taktsignals clk3 der Auslöseeinheit AE.

Je nach Verschiebung der Taktperioden der beiden Taktsignale clk1 und clk3 zueinander weist das Ausgangssignal clk13 des ersten UND - Gatters AND1 eine feste Anzahl von Einzelpulsen pro Periodendauer auf. Im Beispiel der Figur 3 weist das Taktsignal clk13 beispielsweise zwischen 49 und 50 High - Pegel - Pulse pro Pulsfolgen - Periodendauer auf.

Bei synchroner Taktung der beiden Taktsignale clk1 und clk3 wäre die Anzahl der Einzelpulse innerhalb einer Pulsfolge pro Zeiteinheit immer gleich. Ein entsprechender Fall ist beispielsweise in der Figur 4 für die beiden Taktsignale clk1 und clk2 mit Taktfrequenzen von beispielsweise 1 kHz bzw. 2 kHz dargestellt.

Die zweite Pulszahlvergleichereinheit PZVE2 der zweiten Recheneinheit R2 zählt die Anzahl von Einzelpulsen im Ausgangssignal clk13 des ersten UND - Gatters AND1 und vergleicht diesen Wert mit einem Vergleichswert, der in der zweiten Recheneinheit R2 hinterlegt ist, beispielsweise in einem RAM - Speicher. Weicht die ermittelte Anzahl von Pulsen im Ausgangssignal clk13 des ersten UND - Gatters AND1 von diesem gespeicherten Wert in unzulässiger Weise ab, so aktiviert die zweite Pulszahlvergleichereinheit PZVE2 den zweiten Rücksetzer RES2, der ein zweites Reset-Signal sr2 über das zweite ODER - Gatter OR2 an den Reset-Eingang RESET1 der ersten Recheneinheit R1 ausgibt. Dadurch wird die erste Recheneinheit R1 elektrisch zurückgesetzt.

In dem gezeigten Ausführungsbeispiel der Figur 1 kann wahlweise gleichzeitig der zweite Rücksetzer RES2 ein weiteres Rücksetzungssignal sae2 über das dritte ODER - Gatter OR3 an die Auslöseeinheit AE weitergeben, wodurch auch die Auslöseeinheit AE in ihren elektrischen Ausgangszustand zurückgesetzt wird.

Im zurückgesetzten Zustand kann ein an die Auslöseeinheit AE angeschlossene Insassenschutzmittel weder gesteuert durch die erste Recheneinheit R1 noch aktiviert durch die Auslöseeinheit AE ausgelöst werden.

Nach dem Zurücksetzen der ersten Recheneinheit R1 und der Auslöseeinheit AE durchlaufen beide einen Funktionshochlauf, während dessen die volle Funktionalität der beiden Funktionseinheiten R1 und AE innerhalb des Steuergeräts des Insassenschutzmittels wieder vollständig hergestellt wird. Erst nach erfolgtem und erfolgreichem Funktionshochlauf beider Funktionseinheiten R1 und AE kann das an die Auslöseeinheit AE angeschlossene Insassenschutzmittel ggf. wieder ausgelöst werden.

Stellt allerdings die zweite Pulszahlvergleichereinheit PZVE2 der zweiten Recheneinheit R2 wiederum eine Fehlfunktion entweder der ersten Recheneinheit R1 oder der Auslöseeinheit AE anhand des Ausgangssignals clk13 des ersten UND - Gatters AND1 fest, so werden die beiden Funktionseinheiten R1 und AE abermals zurückgesetzt oder auf Dauer deaktiviert.

Eine dauerhafte Deaktivierung der ersten Recheneinheit R1 oder der Auslöseeinheit AE des Insassenschutzmittels wird dabei üblicherweise dem Fahrzeughalter durch eine sogenannte Airbagwarnlampe in der Fahrzeugarmatur angezeigt.

Die Funktionsweise der Beschaltung des zweiten UND - Gatters AND2 ergibt sich völlig analog aus der Funktion der Beschaltung des ersten UND - Gatters AND1:

Das zweite UND - Gatter AND2 erzeugt ausgangsseitig ein modifiziertes Taktsignal clk23 aus den beiden eingangsseitig zugeführten Taktsignalen clk2 der zweiten Recheneinheit R2 und des Taktsignals clk3 der Auslöseeinheit AE. Wie im Falle des ersten UND - Gatters AND1 weist das Ausgangssignal clk23 des zweiten UND - Gatters AND2 nur dann einen logischen High-Pegel auf, wenn die eingangsseitig zugeführten Taktsignale clk2 und clk3 auch gleichzeitig einen logischen High-Pegel aufweisen. Üblicherweise ist auch hier die Periode des zweiten Taktsignals clk2 kleiner als die Periode des Taktsignals clk3 der Auslöseeinheit AE. Deshalb treten auch im Ausgangssignal des zweiten UND - Gatters clk23 Pulsfolgen auf, die mit der langsameren Periode des Taktsignals der zweiten Recheneinheit clk2 moduliert sind und je nach Periodenverschiebung der beiden zusammengefügten Taktsignale clk2 und clk3 eine in einem engen Toleranzrahmen feste Anzahl von Einzelpulsen pro Zeiteinheit aufweisen.

Die erste Pulszahlvergleichereinheit PZVE1 der ersten Recheneinheit R1 zählt die Anzahl von Einzelpulsen im Ausgangssignal clk23 des zweiten UND - Gatters AND2 und vergleicht den ermittelten Wert mit einem weiteren Vergleichswert, der in der ersten Recheneinheit R1 hinterlegt wurde, beispielsweise in einem Ramspeicher. Weicht die ermittelte Anzahl von Pulsen im Ausgangssignal clk23 des zweiten UND - Gatters AND2 von diesem weiteren Vergleichswert ab, so aktiviert in diesem Fall die erste Pulszahlvergleichereinheit PZVE1 den ersten Rücksetzer RES1, der ein Reset-Signal sr1 über das erste ODER - Gatter OR1 an den Reseteingang RESET2 der zweiten Recheneinheit R2 ausgibt. Dadurch wird die zweite Recheneinheit R2 durch die erste Recheneinheit R1 elektrisch zurückgesetzt.

In dem gezeigten Ausführungsbeispiel der Figur 1 kann ebenfalls gleichzeitig der erste Rücksetzer RES1 ein Rücksetzungssignal sae1 über das dritte ODER - Gatter OR3 an die Auslöseeinheit AE weitergeben, wodurch auch die Auslöseeinheit AE in ihren elektrischen Ausgangszustand zurückgesetzt wird.

Im übrigen gilt im gezeigten Ausführungsbeispiel der Figur 1 für das Zurücksetzen der zweiten Recheneinheit R2 und der Auslöseeinheit AE durch den ersten Rücksetzer RES1 und einen dadurch veranlassten erneuten Funktionshochlauf dieser beiden Funktionseinheiten in völlig analoger Weise das für das Zurücksetzen der ersten Recheneinheit R1 und der Auslöseeinheit AE durch den zweiten Rücksetzer RES2 und den dadurch veranlassten erneuten Funktionshochlauf der ersten Recheneinheit R1 und der Auslöseeinheit AE bereits beschriebene.

Entsprechend wird auch eine dauerhafte Deaktivierung der ersten Recheneinheit R1 oder der Auslöseeinheit AE des Insassenschutzmittels dabei dem Fahrzeughalter durch eine sog. Airbagwarnlampe in der Fahrzeugarmatur angezeigt.

Um die Sicherheit im Erkennen möglicher Fehlfunktionen des Steuergerätes des Insassenschutzmittels weiter zu erhöhen, ist in der dargestellten erfindungsgemäßen Steuereinheit eine zusätzliche Funktionsüberwachung der ersten Recheneinheit R1 durch die Auslöseeinheit AE mit Hilfe einer sogenannten ersten watchdog - Schaltung WDS1 realisiert:

Die erste Recheneinheit R1 gibt dabei in periodischen Zeitabständen ein erstes watchdog - Signal wd1 an die Auslöseeinheit AE aus. Beim Ausbleiben des erwarteten watchdog - Signals wd1 am watchdog - Signaleingang AE1 gibt die Auslöseeinheit AE ein Recheneinheitsrücksetzungssignal sae von ihrem Signalausgang SAE an den zweiten Signaleingang sowohl der ersten ODER - Einheit OR1 als auch der zweiten ODER - Einheit OR2 aus, wodurch sowohl die erste Recheneinheit R1 über den ersten Reset-Eingang RESET1 als auch die zweite Recheneinheit R2 über den zweiten Reset-Eingang RESET2 zurückgesetzt wird.

Alternativ kann auch eine Schaltungsanordnung verwendet werden, bei der der Signalausgang SAE der Auslöseeinheit AE nicht mit dem zweiten Signaleingang der ersten ODER - Einheit OR1 verbunden ist. Folglich gibt die Auslöseeinheit AE dann das Recheneinheitsrücksetzungssignal sae lediglich an den zweiten Signaleingang der zweiten ODER - Einheit OR2, so dass so dass im Fehlerfall der ersten watchdog-Schaltung WDS1 nur die erste Recheneinheit R1 über den ersten Reset-Eingang RESET1 zurückgesetzt wird.

In jedem Fall können durch die erste watchdog - Schaltung WDS1 ggf. zusätzliche Fehler in der ersten Recheneinheit R1 erkannt werden, die dem Ausgangssignal clk13 des ersten UND - Gatters AND1 nicht entnommen werden können.

In entsprechender Weise wie im Falle der ersten Recheneinheit R1 eine Überwachung durch die erste watchdog-Schaltung WDS1 erfolgt wird in Figur 1 auch die zweite Recheneinheit R2 von der Auslöseeinheit AE durch eine zweite watchdog - Schaltung WDS2 über eine Verbindung des zweiten watchdog - Ausgangs WD2 mit einem zweiten watchdog - Eingang AE2 der Auslöseeinheit AE und unter Zuhilfenahme eines periodischen watchdog - Signals wd2 überwacht. Analog zur ersten watchdog-Schaltung WDS1 setzt die Auslöseeinheit AE im Falle der zweiten watchdog-Schaltung WDS2 der Figur 1 bei einem unzulässigen watchdog-Signal wd2 die zweite Recheneinheit R2 als auch die erste Recheneinheit R1 durch das Recheneinheitsrücksetzungssignal sae zurück.

Alternativ ist jedoch auch eine Schaltungsanordnung denkbar, bei der der Signalausgang SAE der Auslöseeinheit AE nicht wie in der Figur 1 gezeigt mit beiden Oder - Gattern OR1 und OR2 verbunden ist, sondern nur mit dem zweiten Signaleingang der ersten ODER - Einheit OR1. Folglich gibt dann die Auslöseeinheit AE das Recheneinheitsrücksetzungssignal sae lediglich an den zweiten Signaleingang der ersten ODER - Einheit OR1 aus, so dass im Fehlerfall der zweiten watchdog-Schaltung WDS2 nur die zweite Recheneinheit R2 über den zweiten Reset-Eingang RESET2 zurückgesetzt wird.

Auch die zweite watchdog - Schaltung WDS2 kann auf diese Weise ggf. Fehler der zweiten Recheneinheit R2 erkennen, die dem Ausgangssignal clk23 des zweiten UND - Gatters AND2 nicht entnommen werden können.

Bei ein- oder mehrmaligem Zurücksetzen mindestens einer der beiden Recheneinheiten R1 oder R2 durch mindestens eine der beiden watchdog-Schaltungen WDS1 und WDS2 wird eine Warnlampe im Fahrzeuginneren als Hinweis auf eine mögliche Fehlfunktion der Steuereinheit für das Insassenschutzsystem an den Fahrzeughalter aktiviert.

Wie im gezeigten Beispiel der Figur 1 können die beiden watchdog - Schaltungen WDS1 und WDS2 gleichzeitig verwendet werden. Es ist aber ebenso möglich, nur eine der beiden watchdog - Schaltungen WDS1 oder WDS2 innerhalb der erfindungsgemäßen Steuereinheit vorzusehen, die jeweils aber derart verschaltet ist, dass sie mindestens eine der beiden Recheneinheiten R1 und R2 und wahlweise auch die Auslöseeinheit AE zurücksetzen kann.

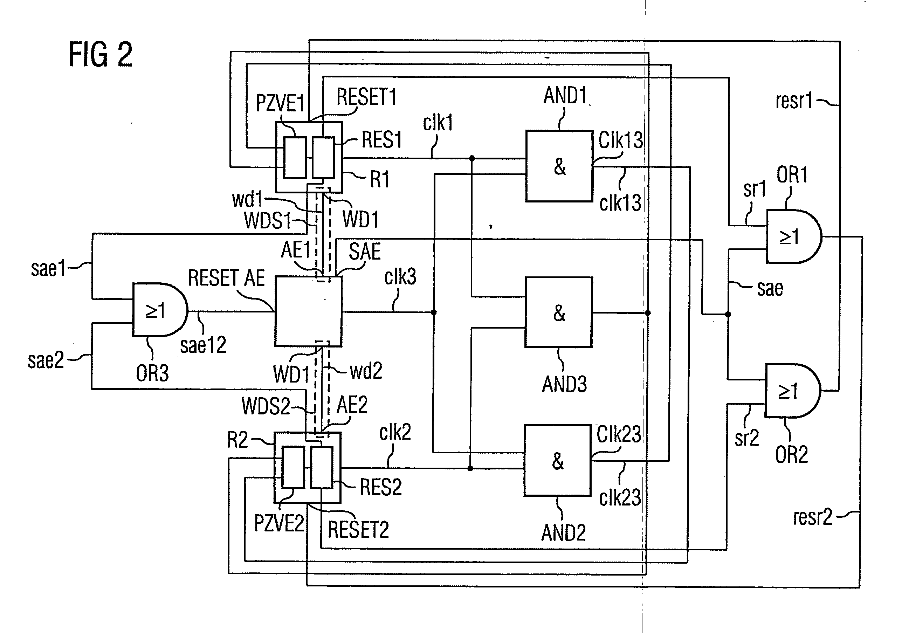

Figur 2 zeigt die erfindungsgemäße Steuereinheit aus Figur 1, jedoch erweitert um ein drittes UND - Gatter AND3. Dem dritten UND - Gatter AND3 sind eingangsseitig die Taktsignale clk1 und clk2 der ersten Recheneinheit R1 und der zweiten Recheneinheit R2 zugeführt. Am Signalausgang des dritten UND - Gatters AND3 liegt ein logisches Summensignal clk23 der beiden Taktsignale clk1 und clk2 der beiden Recheneinheiten R1 und R2 vor, das einem jeweils zweiten Signaleingang der ersten Pulszahlvergleichereinheit PZVE1 und der zweiten Pulszahlvergleichereinheit PZVE2 zugeführt wird. Der jeweilige Signalausgang der ersten bzw. zweiten Pulszahlvergleichereinheit PZVE1 bzw. PZVE2 ist mit dem ersten Rücksetzer RES1 bzw. dem zweiten Rücksetzer RES2 verbunden.

Ein erstes Ausgangssignal sr1 des ersten Rücksetzers RES1 der ersten Recheneinheit R1 wird einem Eingang der ersten ODER - Einheit OR1 zugeführt. Der Signalausgang der ersten ODER - Einheit OR1 ist mit dem zweiten Reseteingang RESET2 verbunden, wie bereits weiter oben erwähnt. Analog ist ein Signalausgang sr2 des zweiten Rücksetzers RES2 der zweiten Recheneinheit R2 mit einem Signaleingang des zweiten ODER - Gatters OR2 verbunden. Der Signalausgang des zweiten ODER - Gatters OR2 ist mit dem ersten Reseteingang RESET1 der ersten Recheneinheit R1 verbunden, wie ebenfalls bereits weiter oben beschrieben.

Das Ausgangssignal des dritten UND - Gatters c1k12 wird in ganz ähnlicher Weise ausgewertet wie die beiden Ausgangssignale der beiden anderen UND - Gatter AND1 und AND2:

Die erste Pulszahlvergleichereinheit PZVE1 zählt die Anzahl der empfangenen Pulse im Ausgangssignal clk12 des dritten UND - Gatters AND3 und vergleicht die Anzahl der empfangenen Pulse pro Zeiteinheit mit einem vorher festgelegten Wert, der beispielsweise in einem Ramspeicher der ersten Recheneinheit R1 gespeichert ist. Weicht dieser Wert über ein vorher festgelegtes zulässiges Höchstmaß hinaus von dem gespeicherten Wert ab, so aktiviert die erste Pulszahlvergleichereinheit PZVE1 den ersten Rücksetzer RES1, der die zweite Recheneinheit R1 mittelbar über das erste ODER - Gatter OR1 zurücksetzt.

Ebenso ermittelt die zweite Pulszahlvergleichereinheit PZVE2 die Anzahl der empfangenen Pulse im Ausgangssignal clk12 des dritten UND - Gatters AND3 und gibt bei einer als unzulässig erkannten Anzahl von Einzelpulsen pro Zeiteinheit die Aktivierung des zweiten Rücksetzers RES2 frei, der daraufhin die erste Recheneinheit R1 mittelbar über das zweite ODER - Gatter OR2 zurücksetzt.

Gleichzeitig mit dem Zurücksetzen der ersten Recheneinheit R1 oder der zweiten Recheneinheit R2 kann im Ausführungsbeispiel der Figur 2 über das dritte ODER - Gatter OR3 ein Zurücksetzen der Auslöseeinheit AE veranlasst werden.

Durch Hinzufügen des dritten UND - Gatters AND3 können sich die Recheneinheiten R1 und R2 folglich gegenseitig zurücksetzen, wenn mindestens eines der Taktsignale einer der beiden Recheneinheiten R1 oder R2 gestört ist. Im Gegensatz zu einem Zurücksetzen mindestens einer der beiden Recheneinheiten R1 oder R2 und wahlweise auch der Auslöseeinheit AE aufgrund der Signale clk13 und clk23 des ersten UND - Gatters AND1 und des zweiten UND - Gatters AND2 kann also durch die Auswertung des Ausgangssignals clk12 des dritten UND - Gatters AND3 völlig unabhängig von dem Taktsignal clk3 der Auslöseeinheit AE ein Zurücksetzen der Recheneinheiten R1 und R2 und vorzugsweise auch der Auslöseeinheit AE erfolgen.

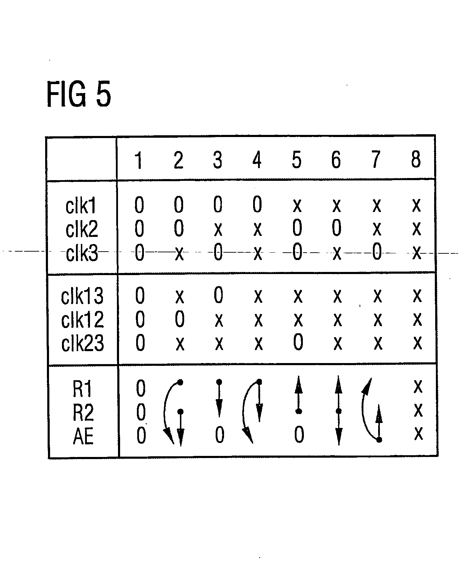

Figur 5 zeigt zusammengefasst eine mögliche Entscheidungsmatrix, nach der die beiden Recheneinheiten R1, R2 und die Auslöseeinheit AE der erfindungsgemäßen Steuereinheit nach Figur 2 zurückgesetzt werden können:

Eine in die Matrix eingetragene Null bedeutet eine ordnungsgemäße Funktionsweise der Taktsignale clk1, clk2, clk3, der logisch UND-verknüpften Taktsignale clk13, clk12, clk23 und auch eine ordnungsgemäße Funktionsweise der ersten Recheneinheit R1, der zweiten Recheneinheit R2 und der Auslöseeinheit AE. Ein in die Entscheidungsmatrix eingetragenes X bedeutet im Gegensatz dazu ein fehlerhaftes Taktsignal clk1, clk2, clk3 oder ein fehlerhaftes zusammengesetztes Taktsignal clk13, clk12 und clk23, bzw. ein fehlerhaftes Funktionieren der ersten Recheneinheit R1, der zweiten Recheneinheit R2 oder der Auslöseeinheit AE.

Die in den letzten drei Zeilen eingetragenen Pfeile zeigen mit ihren Spitzen auf diejenigen Recheneinheiten R1 und R2 oder auf die Auslöseeinheit AE, die von der Recheneinheiten R1 oder R2 bzw. von der Auslöseeinheit AE am Ausgangspunkt des Pfeils zurückgesetzt wird.

Die Spalten der Entscheidungsmatrix der Figur 5 sind demnach folgendermaßen zu lesen:

In der Spalte 1 funktionieren alle Taktsignale clkl, clk2, clk3, clk13, clk12 und clk23 ordnungsgemäß, da auch die beteiligten Recheneinheiten R1, R2 und die Auslöseeinheit AE ordnungsgemäß arbeiten.

In der zweiten Spalte ist ein fehlerhaftes Taktsignal clk3 der Auslöseeinheit AE eingetragen. Folglich sind auch die kombinierten Taktsignale clk13 und clk23 fehlerhaft. Die ordnungsgemäß funktionierende erste Recheneinheit R1, aber auch die ordnungsgemäß funktionierende zweite Recheneinheit setzen in diesem Fall die fehlerhafte Auslöseeinheit AE zurück.

In der dritten Spalte ist das Taktsignal clk2 der zweiten Recheneinheit R2 fehlerhaft. Folglich sind auch die daraus abgeleiteten Taktsignale c1k12 und c1k23 fehlerhaft. In dieser Konstellation würde die ordnungsgemäß funktionierende erste Recheneinheit R1 die fehlerhafte Recheneinheit R2 zurücksetzen. Die Auslöseeinheit AE funktioniert in diesem Fall zwar fehlerfrei, doch könnte sie aufgrund der in der Figur 2 gezeigten Schaltungsanordnung über das dritte UND - Gatter ebenfalls durch die erste Recheneinheit R1 zurückgesetzt werden.

In Spalte 4 funktioniert lediglich die erste Recheneinheit R1 ordnungsgemäß und setzt folglich die fehlerhafte zweite Recheneinheit R2 und die fehlerhafte Auslöseeinheit AE zurück.

Analog setzt die in Spalte 6 ordnungsgemäß funktionierende zweite Recheneinheit R2 die fehlerhafte erste Recheneinheit R1 und die fehlerhafte Auslöseeinheit AE zurück.

In Spalte 5 funktioniert neben der Auslöseeinheit AE auch die zweite Recheneinheit R2 bestimmungsgemäß. Da die Erkennung einer fehlerhaft funktionierenden ersten Recheneinheit R1 durch die zweite Recheneinheit R2 erfindungsgemäß schneller zur Verfügung steht als die Rücksetzungsfunktion der Auslöseeinheit AE aufgrund der ersten watchdog - Schaltung WDS1 aus der Figur 1 oder 2, setzt die fehlerfrei funktionierende zweite Recheneinheit R2 zunächst die fehlerhafte erste Recheneinheit R1 zurück und erst in einem zweiten Schritt und mittelbar über das dritte ODER - Gatter OR3 wahlweise auch die Auslöseeinheit AE.

Es bleiben noch die beiden Sonderfälle der Spalten 7 und 8 zu erläutern:

Den ersten Sonderfall der Entscheidungsmatrix zeigt Spalte 7. Hier arbeitet nur die Auslöseeinheit AE erwartungsgemäß. Ein Zurücksetzen der beiden Recheneinheiten R1 und R2 erfolgt deshalb aufgrund der beiden watchdog - Schaltungen WDS1 und WDS2, über die die Auslöseeinheit AE die Fehlfunktion der beiden Recheneinheiten R1 und R2 erkennen kann und deshalb das Reset - Signal sae zu deren Zurücksetzung ausgibt.

In Spalte 8 funktioniert keine der Recheneinheiten R1 oder R2 ordnungsgemäß und ebenso wenig die Auslöseeinheit AE. Dieser Fehler der Steuereinheit stellt einen Dreifachfehler dar und ist deshalb sehr unwahrscheinlich. Für diesen Fall kann das Verhalten der Schaltung nicht vorhergesagt werden.

## Patentansprüche

1. Steuereinheit zur Auslösung eines Insassenschutzmittels in einem Kraftfahrzeug,
die eine erste Recheneinheit (R1) und eine zweite Recheneinheit (R2) umfasst und des Weiteren eine Auslöseeinheit (AE), wobei die erste Recheneinheit (R1), die zweite Recheneinheit (R2) und die Auslöseeinheit (AE) jeweils asynchron zueinander getaktet sind, und
- die Steuereinheit ein erstes und ein zweites logisches UND - Gatter (AND1, AND2) umfasst,
- die erste Recheneinheit (R1) der Steuereinheit eine erste Pulszahlvergleichereinheit (PZVE1) und einen ersten Rücksetzer (RES1) aufweist,
- die zweite Recheneinheit (R2) der Steuereinheit eine zweite Pulszahlvergleichereinheit (PZVE2) und einen zweiten Rücksetzer (RES2) aufweist,
- dem ersten logischen UND - Gatter (AND1) eingangsseitig sowohl das Taktsignal (clk1) der ersten Recheneinheit (R1) als auch das Taktsignal (clk3) der Auslöseeinheit (AE) zugeführt ist,
- ein Ausgang (Clk13) des ersten logischen UND - Gatters (AND1) mit einem Eingang der zweiten Pulszahlvergleichereinheit (PZVE2) verbunden ist,
- ein Ausgang der zweiten Pulszahlvergleichereinheit (PZVE2) mit einem Eingang des zweiten Rücksetzers (RES2) verbunden ist,
- ein Ausgang des zweiten Rücksetzers (RES2) direkt oder mittelbar mit einem Reset - Eingang (RESET1) der ersten Recheneinheit (R1) verbunden ist,
und
- dem zweiten logischen UND - Gatter (AND2) eingangsseitig sowohl das Taktsignal (clk2) der zweiten Recheneinheit (R2) als auch das Taktsignal (clk3) der Auslöseeinheit (AE) zugeführt ist,
- ein Ausgang (Clk23) des zweiten logischen UND - Gatters (AND2) mit einem Eingang der ersten Pulszahlvergleichereinheit (PZVE1) verbunden ist,
- ein Ausgang der ersten Pulszahlvergleichereinheit (PZVE1) mit einem Eingang des ersten Rücksetzers (RES1) verbunden ist,
- ein Ausgang des ersten Rücksetzer (RES1) direkt oder mittelbar mit einem Reset - Eingang (RESET2) der zweiten Recheneinheit (R2) verbunden ist,
so dass
- der erste Rücksetzer (RES1) die zweite Recheneinheit (R2) durch die Ausgabe eines ersten Resetsignals (sr1) zurücksetzt, wenn die erste Pulszahlvergleichereinheit (PZVE1) eine unzulässige Anzahl von Pulsen pro Zeiteinheit im Ausgangssignal des zweiten UND - Gatters (AND2) erkennt und
- der zweite Rücksetzer (RES2) die erste Recheneinheit (R1) durch Ausgabe eines zweiten Resetsignals (sr2) zurücksetzt, wenn die zweite Pulszahlvergleichereinheit (PZVE2) eine unzulässige Anzahl von Pulsen pro Zeiteinheit im Ausgangssignal des ersten UND - Gatters (AND1) erkennt.

2. Steuereinheit nach Anspruch 1,
**dadurch gekennzeichnet, dass**
- die Steuereinheit ein erstes und ein zweites logisches ODER - Gatter (OR1, OR2) aufweist,
- ein Ausgang des zweiten Rücksetzers (RES2) mittelbar über das zweite ODER - Gatter (OR2) mit dem Reset - Eingang (RESET1) der ersten Recheneinheit (R1) verbunden ist,
- ein Ausgang des ersten Rücksetzers (RES1) mittelbar über das erste ODER - Gatter (OR1) mit dem Reset - Eingang (RESET2) der zweiten Recheneinheit (R2) verbunden ist,
so dass
- der erste Rücksetzer (RES1) die zweite Recheneinheit (R2) durch die Ausgabe eines ersten Resetsignals (sr1) mittelbar über das erste ODER - Gatter (OR1) zurücksetzt, wenn die erste Pulszahlvergleichereinheit (PZVE1) eine unzulässige Anzahl von Pulsen pro Zeiteinheit im Ausgangssignal (clk23) des zweiten UND - Gatters (AND2) erkennt und
- der zweite Rücksetzer (RES2) die erste Recheneinheit (R1) durch Ausgabe eines zweiten Resetsignals (sr2) mittelbar über das zweite ODER - Gatter (OR2) zurücksetzt, wenn die zweite Pulszahlvergleichereinheit (PZVE2) eine unzulässige Anzahl von Pulsen pro Zeiteinheit im Ausgangssignal (clk13) des ersten UND - Gatters (AND1) erkennt.

3. Steuereinheit nach Anspruch 1 oder 2,
**dadurch gekennzeichnet, dass**
- der erste Rücksetzer (RES1) und/oder der zweite Rücksetzer (RES2) mit einem Reset - Eingang (RESETAE) der Auslöseeinheit (AE) direkt oder mittelbar verbunden ist, so dass
- der erste Rücksetzer (RES1) die Auslöseeinheit (AE) durch Ausgabe eines ersten Auslöser - Reset - Signals (sae1) zurücksetzt, wenn die erste Pulszahlvergleichereinheit (PZVE1) eine unzulässige Anzahl von Pulsen pro Zeiteinheit im Ausgangssignal (clk23) des zweiten UND - Gatters (AND2) erkennt und/oder
- der zweite Rücksetzer (RES2) die Auslöseeinheit (AE) durch Ausgabe eines zweiten Auslöser - Reset - Signals (sae2) zurücksetzt, wenn die zweite Pulszahlvergleichereinheit (PZVE2) eine unzulässige Anzahl von Pulsen pro Zeiteinheit im Ausgangssignal (clk13) des ersten UND - Gatters (AND1) erkennt.

4. Steuereinheit nach einem der Ansprüche 1 bis 3,
**dadurch gekennzeichnet, dass**
- die Steuereinheit ein drittes logisches UND - Gatter (AND3) aufweist,
- dem dritten logischen UND - Gatter (AND3) eingangsseitig das Taktsignal (clk1) der ersten Recheneinheit (R1) und das Taktsignal (clk2) der zweiten Recheneinheit (R2) zugeführt sind,
- das Ausgangssignal (clk12) des dritten logischen UND - Gatters (AND3) sowohl mit einem Eingang der ersten Pulszahlvergleichereinheit (PZVE1) als auch mit einem Eingang der zweiten Pulszahlvergleichereinheit (PZVE2) verbunden ist,
so dass
- der erste Rücksetzer (RES1) die zweite Recheneinheit (R2) durch Ausgabe eines ersten Resetsignals (sr1) zurücksetzt, wenn die erste Pulszahlvergleichereinheit (PZVE1) eine unzulässige Anzahl von Pulsen pro Zeiteinheit im Ausgangssignal (clk12) des dritten UND - Gatters (AND3) erkennt und
- der zweite Rücksetzer (RES2) die erste Recheneinheit (R1) durch Ausgabe eines zweiten Resetsignals (sr2) zurücksetzt, wenn die zweite Pulszahlvergleichereinheit (PZVE2) eine unzulässige Anzahl von Pulsen pro Zeiteinheit im Ausgangssignal (clk12) des dritten UND - Gatters (AND3) erkennt.

5. Steuereinheit nach einem der vorherigen Ansprüche,
**dadurch gekennzeichnet, dass**
- ein watchdog - Eingang der Auslöseeinheit (AE1) mit einem ersten watchdog - Ausgang (WD1) der ersten Recheneinheit (R1) verbunden ist,
- ein Recheneinheitsrücksetzungsausgang (SAE) der Auslöseeinheit direkt oder mittelbar über das zweite ODER - Gatter (OR2) mit dem Reseteingang (RESET1) der ersten Recheneinheit (R1) verbunden ist,
so dass
die Auslöseeinheit (AE) ein Recheneinheitsrücksetzungssignal (sae) direkt oder mittelbar über das zweite ODER - Gatter (OR2) an den Reset - Eingang (RESET1) der erste Recheneinheit (R1) ausgibt, wenn die Auslöseeinheit (AE) ein unzulässiges watchdog - Signal (wd1) vom ersten Überwachungsausgang (WD1) empfängt.

6. Steuereinheit nach einem der vorherigen Ansprüche,
**dadurch gekennzeichnet, dass**
- ein Signaleingang der Auslöseeinheit (AE) mit einem zweiten watchdog - Ausgang (WD2) der zweiten Recheneinheit (R2) verbunden ist,
- der Recheneinheitsrücksetzungsausgang (SAE) der Auslöseeinheit (AE) direkt oder mittelbar über das erste ODER - Gatter (OR1) mit dem Reset - Eingang (RESET2) der zweiten Recheneinheit (R2) verbunden ist,
so dass
die Auslöseeinheit (AE) das Recheneinheitsrücksetzungssignal (sae) direkt oder mittelbar über das erste ODER - Gatter (OR1) an den Reset - Eingang der zweiten Recheneinheit (RESET2) ausgibt, wenn die Auslöseeinheit (AE) ein unzulässiges zweites watchdog - Signal (wd2) vom zweiten watchdog - Ausgang (WD2) empfängt.

7. Verfahren zur Überwachung der ordnungsgemäßen Funktion einer Steuereinheit, gemäß einem der Ansprüche 1 bis 6, wobei
- aus den beiden Taktsignalen (clk1, clk3) einer ersten Recheneinheit (R1) und einer Auslöseeinheit (AE) durch eine erste Logikverknüpfung (AND1) ein erstes verknüpftes Signal (clk13) erzeugt wird,
- eine zweite Recheneinheit (R2) während eines Zeitfensters die Anzahl von Pulsen des ersten verknüpften Signals (clk13) zählt,
- die zweite Recheneinheit (R2) die Anzahl der gezählten Pulse mit einem Referenzwert vergleicht, der im Speicher der zweiten Recheneinheit (R2) hinterlegt ist und
- die zweite Recheneinheit (R2) ein Rücksetzungssignal an einen ersten Reseteingang (RESET1) der ersten Recheneinheit (R1) ausgibt, wenn die Anzahl der gezählten Pulse über ein zulässiges Maß hinaus von dem Referenzwert des Speichers der zweiten Recheneinheit (R2) abweicht.

8. Verfahren nach Anspruch 7,
**dadurch gekennzeichnet, dass**
- aus den beiden Taktsignalen (clk2, clk3) der zweiten Recheneinheit (R2) und der Auslöseeinheit (AE) durch eine zweite Logikverknüpfung (AND2) ein zweites verknüpftes Signal (clk23) erzeugt wird,
- die erste Recheneinheit (R1) während eines Zeitfensters die Anzahl von Pulsen des zweiten verknüpften Signals (clk23) zählt,
- die erste Recheneinheit (R1) die Anzahl der gezählten Pulse mit einem Referenzwert vergleicht, der im Speicher der ersten Recheneinheit (R1) hinterlegt ist und
- die erste Recheneinheit (R1) ein Rücksetzungssignal an einen zweiten Reseteingang (RESET2) der zweiten Recheneinheit (R2) ausgibt, wenn die Anzahl der gezählten Pulse über ein zulässiges Maß hinaus von dem Referenzwert abweicht.

9. Verfahren nach einem der Ansprüche 7 oder 8,
**dadurch gekennzeichnet, dass**
- die erste Recheneinheit (R1) die Auslöseeinheit (AE) durch Ausgabe eines ersten Auslöser - Reset - Signals (sae1) zurücksetzt, wenn die erste Recheneinheit (R1) eine unzulässige Anzahl von Pulsen pro Zeiteinheit im zweiten verknüpften Signal (clk23) erkennt und/oder
- die zweite Recheneinheit (R2) die Auslöseeinheit (AE) durch Ausgabe eines zweiten Auslöser - Reset - Signals (sae2) zurücksetzt, wenn die zweite Recheneinheit (R2)eine unzulässige Anzahl von Pulsen pro Zeiteinheit im ersten verknüpften Signal (clk13) erkennt.

10. Verfahren nach einem der Ansprüche 7 bis 9,
**dadurch gekennzeichnet, dass**
- aus den beiden Taktsignalen (clk1, clk2) der ersten Recheneinheit (R1) und der zweiten Recheneinheit (R2) durch eine dritte Logikverknüpfung (AND3) ein drittes verknüpftes Signal (c1k12) erzeugt wird,
- sowohl die erste Recheneinheit (R1) als auch die zweite Recheneinheit (R2) während eines Zeitfensters die Anzahl von Pulsen des dritten verknüpften Signals (clk12) zählt,
- sowohl die erste Recheneinheit (R1) als auch die zweite Recheneinheit (R2) die Anzahl der gezählten Pulse mit je einem Referenzwert vergleicht, der im Speicher der ersten Recheneinheit (R1) bzw. im Speicher der zweiten Recheneinheit (R2) hinterlegt ist,
- die erste Recheneinheit (R1) die zweite Recheneinheit (R2) durch Ausgabe eines ersten Resetsignals (sr1) zurücksetzt, wenn die erste Recheneinheit (R1) eine unzulässige Anzahl von Pulsen pro Zeiteinheit im dritten verknüpften Signal (clk12) durch den Vergleich mit dem jeweiligen Referenzwert erkennt und
- die zweite Recheneinheit (R2) die erste Recheneinheit (R1) durch Ausgabe eines zweiten Resetsignals (sr2) zurücksetzt, wenn die zweite Recheneinheit (R2) eine unzulässige Anzahl von Pulsen pro Zeiteinheit im dritten verknüpften Signal (clk12) durch den Vergleich mit dem jeweiligen Referenzwert erkennt.

11. Verfahren nach einem der Ansprüche 8 bis 10,
**dadurch gekennzeichnet, dass**
- einem ersten Überwachungseingang (AE1) der Auslöseeinheit (AE) ein erstes watchdog - Signal (wd1) von einem ersten Überwachungsausgang (WD1) der ersten Recheneinheit (R1) zugeführt wird und daraufhin
- ein Recheneinheitsrücksetzungsausgang (SAE) der Auslöseeinheit (AE) ein Recheneinheitsrücksetzungssignal (sae) an den ersten Reset - Eingang (RESET1) der ersten Recheneinheit (R1) ausgibt, wenn das erste watchdog - Signal (wd1) unzulässig ist
und/oder
- einem zweiten Überwachungseingang (AE2) der Auslöseeinheit (AE) ein zweites watchdog - Signal (wd2) vom zweiten Überwachungsausgang (WD2) der zweiten Recheneinheit (R2) zugeführt wird und daraufhin
- der Recheneinheitsrücksetzungsausgang (SAE) der Auslöseeinheit (AE) das Recheneinheitsrücksetzungssignal (sae) an den zweiten Reset - Eingang (RESET2) der zweiten Recheneinheit (R2) ausgibt, wenn das zweite watchdog - Signal (wd2) unzulässig ist.

12. Verfahren nach einem der Ansprüche 7 bis 11,
**gekennzeichnet dadurch, dass**
eine der beiden Recheneinheiten (R1, R2) der Steuereinheit eines Insassenschutzsystems eines Kraftfahrzeuges nach ein - oder mehrmaligem Rücksetzen der jeweils anderen Recheneinheit (R1, R2) oder der Auslöseeinheit (AE) das Insassenschutzsystem zumindest teilweise deaktiviert und/oder dem Fahrzeuginsassen die Fehlfunktionen der Steuereinheit und die zumindest teilweise Deaktivierung des Insassenschutzmittels anzeigt.

## Claims

1. Control unit for activating an occupant protection means in a motor vehicle,
comprising a first arithmetic unit (R1) and a second arithmetic unit (R2), as well as an activating unit (AE), wherein the first arithmetic unit (R1), the second arithmetic unit (R2) and the activating unit (AE) are in each case clocked asynchronously relative to one another, and
- the control unit comprises a first and a second logical AND gate (AND1, AND2),
- the first arithmetic unit (R1) of the control unit has a first pulse count comparator unit (PZVE1) and a first resetter (RES1),
- the second arithmetic unit (R2) of the control unit has a second pulse count comparator unit (PZVE2) and a second resetter (RES2),
- both the clock signal (clk1) of the first arithmetic unit (R1) and the clock signal (clk3) of the activating unit (AE) are fed to the first logical AND gate (AND1) on the input side,
- an output (clk13) of the first logical AND gate (AND1) is connected to an input of the second pulse count comparator unit (PZVE2),
- an output of the second pulse count comparator unit (PZVE2) is connected to an input of the second resetter (RES2),
- an output of the second resetter (RES2) is connected directly or indirectly to a reset input (RESET1) of the first arithmetic unit (R1),
and
- both the clock signal (clk2) of the second arithmetic unit (R2) and the clock signal (clk3) of the activating unit (AE) are fed to the second logical AND gate (AND2) on the input side,
- an output (clk23) of the second logical AND gate (AND2) is connected to an input of the first pulse count comparator unit (PZVE1),
- an output of the first pulse count comparator unit (PZVE1) is connected to an input of the first resetter (RES1),
- an output of the first resetter (RES1) is connected directly or indirectly to a reset input (RESET2) of the second arithmetic unit (R2),
such that
- the first resetter (RES1) resets the second arithmetic unit (R2) by outputting a first reset signal (sr1) if the first pulse count comparator unit (PZVE1) detects an inadmissible number of pulses per unit of time in the output signal of the second AND gate (AND2) and
- the second resetter (RES2) resets the first arithmetic unit (R1) by outputting a second reset signal (sr2) if the second pulse count comparator unit (PZVE2) detects an inadmissible number of pulses per unit of time in the output signal of the first AND gate (AND1).

2. Control unit according to claim 1,
**characterised in that**
- the control unit has a first and a second logical OR gate (OR1, OR2),
- an output of the second resetter (RES2) is connected indirectly via the second OR gate (OR2) to the reset input (RESET1) of the first arithmetic unit (R1),
- an output of the first resetter (RES1) is connected indirectly via the first OR gate (OR1) to the reset input (RESET2) of the second arithmetic unit (R2),
such that
- the first resetter (RES1) resets the second arithmetic unit (R2) by outputting a first reset signal (sr1) indirectly via the first OR gate (OR1) if the first pulse count comparator unit (PZVE1) detects an inadmissible number of pulses per unit of time in the output signal (clk23) of the second AND gate (AND2) and
- the second resetter (RES2) resets the first arithmetic unit (R1) by outputting a second reset signal (sr2) indirectly via the second OR gate (OR2) if the second pulse count comparator unit (PZVE2) detects an inadmissible number of pulses per unit of time in the output signal (clk13) of the first AND gate (AND1).

3. Control unit according to claim 1 or claim 2,
**characterised in that**
- the first resetter (RES1) and/or the second resetter (RES2) is/are connected directly or indirectly to a reset input (RESETAE) of the activating unit (AE),
such that
- the first resetter (RES1) resets the activating unit (AE) by outputting a first activator reset signal (sae1) if the first pulse count comparator unit (PZVE1) detects an inadmissible number of pulses per unit of time in the output signal (clk23) of the second AND gate (AND2) and/or
- the second resetter (RES2) resets the activating unit (AE) by outputting a second activator reset signal (sae2) if the second pulse count comparator unit (PZVE2) detects an inadmissible number of pulses per unit of time in the output signal (clk13) of the first AND gate (AND1).

4. Control unit according to any one of claims 1 to 3,
**characterised in that**
- the control unit has a third logical AND gate (AND3),
- the clock signal (clk1) of the first arithmetic unit (R1) and the clock signal (clk2) of the second arithmetic unit (R2) are fed to the third logical AND gate (AND3) on the input side,
- the output signal (clk12) of the third logical AND gate (AND3) is connected to both an input of the first pulse count comparator unit (PZVE1) and an input of the second pulse count comparator unit (PZVE2),
such that
- the first resetter (RES1) resets the second arithmetic unit (R2) by outputting a first reset signal (sr1) if the first pulse count comparator unit (PZVE1) detects an inadmissible number of pulses per unit of time in the output signal (clk12) of the third AND gate (AND3) and
- the second resetter (RES2) resets the first arithmetic unit (R1) by outputting a second reset signal (sr2) if the second pulse count comparator unit (PZVE2) detects an inadmissible number of pulses per unit of time in the output signal (clk12) of the third AND gate (AND3).

5. Control unit according to any one of the preceding claims,
**characterised in that**
- a watchdog input of the activating unit (AE1) is connected to a first watchdog output (WD1) of the first arithmetic unit (R1),
- an arithmetic unit resetting output (SAE) of the activating unit is connected directly or indirectly via the second OR gate (OR2) to the reset input (RESET1) of the first arithmetic unit (R1),
such that
- the activating unit (AE) outputs an arithmetic unit resetting signal (sae) directly or indirectly via the second OR gate (OR2) to the reset input (RESET1) of the first arithmetic unit (R1) if the activating unit (AE) receives an inadmissible watchdog signal (wd1) from the first watchdog output (WD1).

6. Control unit according to any one of the preceding claims,
**characterised in that**
- a signal input of the activating unit (AE) is connected to a second watchdog output (WD2) of the second arithmetic unit (R2),
- the arithmetic unit resetting output (SAE) of the activating unit (AE) is connected directly or indirectly via the first OR gate (OR1) to the reset input (RESET2) of the second arithmetic unit (R2),
such that
the activating unit (AE) outputs the arithmetic unit resetting signal (sae) directly or indirectly via the first OR gate (OR1) to the reset input of the second arithmetic unit (RESET2) if the activating unit (AE) receives an inadmissible second watchdog signal (wd2) from the second watchdog output (WD2).

7. Method for monitoring the proper functioning of a control unit according to any one of claims 1 to 6, wherein
- a first combined signal (clk13) is generated by a first logical operation (AND1) from the two clock signals (clk1, clk3) of a first arithmetic unit (R1) and of an activating unit (AE),
- a second arithmetic unit (R2) counts the number of pulses of the first combined signal (clk13) during a time window,
- the second arithmetic unit (R2) compares the number of pulses counted with a reference value which is stored in the memory of the second arithmetic unit (R2) and
- the second arithmetic unit (R2) outputs a resetting signal to a first reset input (RESET1) of the first arithmetic unit (R1) if the number of pulses counted deviates by more than an admissible extent from the reference value stored in the memory of the second arithmetic unit (R2).

8. Method according to claim 7,
**characterised in that**
- a second combined signal (clk23) is generated by a second logical operation (AND2) from the two clock signals (clk2, clk3) of the second arithmetic unit (R2) and of the activating unit (AE),
- the first arithmetic unit (R1) counts the number of pulses of the second combined signal (clk23) during a time window,
- the first arithmetic unit (R1) compares the number of pulses counted with a reference value which is stored in the memory of the first arithmetic unit (R1) and
- the first arithmetic unit (R1) outputs a resetting signal to a second reset input (RESET2) of the second arithmetic unit (R2) if the number of pulses counted deviates by more than an admissible extent from the reference value.

9. Method according to any one of claims 7 or 8,
**characterised in that**
- the first arithmetic unit (R1) resets the activating unit (AE) by outputting a first activator reset signal (sae1) if the first arithmetic unit (R1) detects an inadmissible number of pulses per unit of time in the second combined signal (clk23) and/or
- the second arithmetic unit (R2) resets the activating unit (AE) by outputting a second activator reset signal (sae2) if the second arithmetic unit (R2) detects an inadmissible number of pulses per unit of time in the first combined signal (clk13).

10. Method according to any one of claims 7 to 9,
**characterised in that**
- a third combined signal (clk12) is generated by a third logical operation (AND3) from the two clock signals (clk1, clk2) of the first arithmetic unit (R1) and of the second arithmetic unit (R2),
- both the first arithmetic unit (R1) and the second arithmetic unit (R2) count the number of pulses of the third combined signal (clk12) during a time window,
- both the first arithmetic unit (R1) and the second arithmetic unit (R2) each compare the number of pulses counted with a reference value which is stored in the memory of the first arithmetic unit (R1) or in the memory of the second arithmetic unit (R2),
- the first arithmetic unit (R1) resets the second arithmetic unit (R2) by outputting a first reset signal (sr1) if the first arithmetic unit (R1) detects, by means of the comparison with the respective reference value, an inadmissible number of pulses per unit of time in the third combined signal (clk12) and
- the second arithmetic unit (R2) resets the first arithmetic unit (R1) by outputting a second reset signal (sr2) if the second arithmetic unit (R2) detects, by means of the comparison with the respective reference value, an inadmissible number of pulses per unit of time in the third combined signal (clk12).

11. Method according to any one of claims 8 to 10,
**characterised in that**
- a first watchdog signal (wd1) is fed from a first watchdog output (WD1) of the first arithmetic unit (R1) to a first watchdog input (AE1) of the activating unit (AE) and thereupon
- an arithmetic unit resetting output (SAE) of the activating unit (AE) outputs an arithmetic unit resetting signal (sae) to the first reset input (RESET1) of the first arithmetic unit (R1) if the first watchdog signal (wd1) is inadmissible
and/or
- a second watchdog signal (wd2) is fed from the second watchdog output (WD2) of the second arithmetic unit (R2) to a second watchdog input (AE2) of the activating unit (AE) and thereupon
- the arithmetic unit resetting output (SAE) of the activating unit (AE) outputs the arithmetic unit resetting signal (sae) to the second reset input (RESET2) of the second arithmetic unit (R2) if the second watchdog signal (wd2) is inadmissible.

12. Method according to any one of claims 7 to 11,
**characterised in that**
one of the two arithmetic units (R1, R2) of the control unit of an occupant protection system of a motor vehicle deactivates the occupant protection system at least partially after single or multiple resetting of the respective other arithmetic unit (R1, R2) or of the activating unit (AE) and/or displays the malfunctions of the control unit and the at least partial deactivation of the occupant protection means to the vehicle occupant.

## Revendications

1. Unité de commande destinée à déclencher un système de protection des passagers dans un véhicule automobile,
comprenant une première unité de calcul (R1) et une seconde unité de calcul (R2) et aussi une unité déclencheuse (AE), la première unité de calcul (R1), la seconde unité de calcul (R2) et l'unité déclencheuse (AE) étant respectivement synchronisées réciproquement en mode asynchrone, et
l'unité de commande comprend une première et une deuxième portes logiques ET (AND1, AND2),
- la première unité de calcul (R1) de l'unité de commande comporte une première unité de comparaison du nombre des impulsions (PZVE1) et un premier dispositif de remise à l'état initial (RES1),
- la seconde unité de calcul (R2) de l'unité de commande comporte une seconde unité de comparaison du nombre des impulsions (PZVE2) et un second dispositif de remise à l'état initial (RES2),
- aussi bien le signal d'horloge (clk1) de la première unité de calcul (R1) que le signal d'horloge (clk3) de l'unité déclencheuse (AE) sont appliqués en entrée à la première porte logique ET (AND1),
- une sortie (Clk13) de la première porte logique ET (AND1) est reliée à une entrée de la seconde unité de comparaison du nombre des impulsions (PZVE2),
- une sortie de la seconde unité de comparaison du nombre des impulsions (PZVE2) est reliée à une entrée du second dispositif de remise à l'état initial (RES2),
- une sortie du second dispositif de remise à l'état initial (RES2) est reliée directement ou indirectement à une entrée de restauration (RESET1) de la première unité de calcul (R1),
et
- le signal d'horloge (clk2) de la seconde unité de calcul (R2) et le signal d'horloge (clk3) de l'unité déclencheuse (AE) sont appliqués en entrée à la deuxième porte logique ET (AND2)
- une sortie (Clk23) de la deuxième porte logique ET (AND2) est reliée à une entrée de la première unité de comparaison du nombre des impulsions (PZVE1),
- une sortie de la première unité de comparaison du nombre des impulsions (PZVE1) est reliée à une entrée du premier dispositif de remise à l'état initial (RES1),
- une sortie du premier dispositif de remise à l'état initial (RES1) est reliée directement ou indirectement à une entrée de restauration (RESET2) de la seconde unité de calcul (R2),
de sorte que
- le premier dispositif de remise à l'état initial (RES1) remet à l'état initial la seconde unité de calcul (R2) en délivrant un premier signal de restauration (sr1), lorsque la première unité de comparaison du nombre des impulsions (PZVE1) détecte un nombre non acceptable d'impulsions pour une unité de temps dans le signal de sortie de la deuxième porte ET (AND2), et
- le second dispositif de remise à l'état initial (RES2) remet à l'état initial la première unité de calcul (R1) en délivrant un second signal de restauration (sr2) lorsque la seconde unité de comparaison du nombre des impulsions (PZVE2) détecte un nombre non acceptable d'impulsions pour une unité de temps dans le signal de sortie de la première porte ET (AND1).

2. Unité de commande selon la revendication 1,
**caractérisée en ce que**
- l'unité de commande comporte une première et une deuxième portes logiques OU (OR1, OR2),
- une sortie du second dispositif de remise à l'état initial (RES2) est reliée de façon indirecte à l'entrée de restauration (RESET1) de la première unité de calcul (R1) par l'intermédiaire de la deuxième porte OU (OR2),
- une sortie du premier dispositif de remise à l'état initial (RES1) est reliée de façon indirecte à l'entrée de restauration (RESET2) de la seconde unité de calcul (R2) par l'intermédiaire de la première porte OU (OR1),
de sorte que
- le premier dispositif de remise à l'état initial (RES1) remet à l'état initial la seconde unité de calcul (R2) en délivrant un premier signal de restauration (sr1) de façon indirecte par l'intermédiaire de la première porte OU (OR1), lorsque la première unité de comparaison du nombre des impulsions (PZVE1) détecte un nombre non acceptable d'impulsions pour une unité de temps dans le signal de sortie (clk23) de la deuxième porte ET (AND2), et
- le second dispositif de remise à l'état initial (RES2) remet à l'état initial la première unité de calcul (R1) en délivrant un second signal de restauration (sr2) de façon indirecte par l'intermédiaire de la deuxième porte OU (OR2), lorsque la seconde unité de comparaison du nombre des impulsions (PZVE2) détecte un nombre non acceptable d'impulsions pour une unité de temps dans le signal de sortie (clk13) de la première porte ET (AND1).

3. Unité de commande selon la revendication 1 ou 2,
**caractérisée en ce que**
- le premier dispositif de remise à l'état initial (RES1) et/ou le second dispositif de remise à l'état initial (RES2) est relié de façon directe ou indirecte à une entrée de restauration (RESETAE) de l'unité déclencheuse (AE),
de sorte que
- le premier dispositif de remise à l'état initial (RES1) remet à l'état initial l'unité déclencheuse (AE) en délivrant un premier signal de restauration déclencheur (sae1), lorsque la première unité de comparaison du nombre des impulsions (PZVE1) détecte un nombre non acceptable d'impulsions pour une unité de temps dans le signal de sortie (clk23) de la deuxième porte ET (AND2), et/ou
- le second dispositif de remise à l'état initial (RES2) remet à l'état initial l'unité déclencheuse (AE) en délivrant un second signal de restauration déclencheur (sae2), lorsque la seconde unité de comparaison du nombre des impulsions (PZVE2) détecte un nombre non acceptable d'impulsions pour une unité de temps dans le signal de sortie (clk13) de la première porte ET (AND1).

4. Unité de commande selon l'une quelconque des revendications 1 à 3, **caractérisée en ce que**
- l'unité de commande comporte une troisième porte logique ET (AND3),
- le signal d'horloge (clk1) de la première unité de calcul (R1) et aussi le signal d'horloge (clk2) de la seconde unité de calcul (R2) sont appliqués en entrée à la troisième porte logique ET (AND3),
- le signal de sortie (clk12) de la troisième porte logique ET (AND3) est relié aussi bien à une entrée de la première unité de comparaison du nombre des impulsions (PZVE1) qu'à une entrée de la seconde unité de comparaison du nombre des impulsions (PZVE2),
de sorte que
- le premier dispositif de remise à l'état initial (RES1) remet à l'état initial la seconde unité de calcul (R2) en délivrant un premier signal de restauration (sr1), lorsque la première unité de comparaison du nombre des impulsions (PZVE1) détecte un nombre non acceptable d'impulsions pour une unité de temps dans le signal de sortie (clk12) de la troisième porte ET (AND3), et
- le second dispositif de remise à l'état initial (RES2) remet à l'état initial la première unité de calcul (R1) en délivrant un second signal de restauration (sr2) lorsque la seconde unité de comparaison du nombre des impulsions (PZVE2) détecte un nombre non acceptable d'impulsions pour une unité de temps dans le signal de sortie (clk12) de la troisième porte ET (AND3).

5. Unité de commande selon l'une quelconque des revendications précédentes,
**caractérisée en ce que**
- une entrée de type chien de garde de l'unité déclencheuse (AE1) est reliée à une première sortie de type chien de garde (WD1) de la première unité de calcul (R1),
- une sortie de remise à l'état initial d'unité de calcul (SAE) de l'unité déclencheuse est reliée de façon directe ou indirecte à l'entrée de restauration (RESET1) de la première unité de calcul (R1) par l'intermédiaire de la deuxième porte OU (OR2),
de sorte que
l'unité déclencheuse (AE) délivre un signal de remise à l'état initial d'unité de calcul (SAE) à l'entrée de restauration (RESET1) de la première unité de calcul (R1) de façon directe ou indirecte par l'intermédiaire de la deuxième porte OU (OR2), lorsque l'unité déclencheuse (AE) reçoit un signal de type chien de garde (wd1) non acceptable de la première sortie de surveillance (WD1).

6. Unité de commande selon l'une quelconque des revendications précédentes,
**caractérisée en ce que**
- une entrée de signal de l'unité déclencheuse (AE) est reliée à une seconde sortie de type chien de garde (WD2) de la seconde unité de calcul (R2),
- la sortie de remise à l'état initial d'unité de calcul (SAE) de l'unité déclencheuse (AE) est reliée de façon directe ou indirecte à l'entrée de restauration (RESET2) de la seconde unité de calcul (R2) par l'intermédiaire de la première porte OU (OR1),
de sorte que
l'unité déclencheuse (AE) délivre le signal de remise à l'état initial d'unité de calcul (SAE) à l'entrée de restauration de la seconde unité de calcul (RESET2) de façon directe ou indirecte par l'intermédiaire de la première porte OU (OR1), lorsque l'unité déclencheuse (AE) reçoit un second signal de type chien de garde (wd2) en provenance la seconde sortie de type chien de garde (WD2).

7. Procédé de surveillance du bon fonctionnement d'une unité de commande selon l'une quelconque des revendications 1 à 6, dans lequel
- sur la base des deux signaux d'horloge (clk1, clk3) d'une première unité de calcul (R1) et d'une unité déclencheuse (AE), un premier signal de connexion logique (ckl13) est produit par une première connexion logique (AND1),
- une seconde unité de calcul (R2) compte le nombre d'impulsions du premier signal de connexion logique (clk13) durant une fenêtre temporelle,
- la seconde unité de calcul (R2) compare le nombre des impulsions comptées avec une valeur de référence, qui est conservée dans la mémoire de la seconde unité de calcul (R2), et
- la seconde unité de calcul (R2) délivre un signal de remise à l'état initial à une première entrée de restauration (RESET1) de la première unité de calcul (R1), lorsque le nombre des impulsions comptées présente par rapport à la valeur de référence de la mémoire de la seconde unité de calcul (R2) un écart dépassant un seuil acceptable.

8. Procédé selon la revendication 7,
**caractérisé en ce que**
- sur la base des deux signaux d'horloge (clk2, clk3) de la seconde unité de calcul (R2) et de l'unité déclencheuse (AE), un deuxième signal de connexion logique (ckl23) est produit par une deuxième connexion logique (AND2),
- la première unité de calcul (R1) compte le nombre des impulsions du deuxième signal de connexion logique (clk23) durant une fenêtre temporelle,
- la première unité de calcul (R1) compare le nombre des impulsions comptées avec une valeur de référence qui est conservée dans la mémoire de la première unité de calcul (R1), et
- la première unité de calcul (R1) délivre un signal de remise à l'état initial à une seconde entrée de restauration (RESET2) de la seconde unité de calcul (R2), lorsque le nombre des impulsions comptées présente par rapport à la valeur de référence un écart dépassant un seuil acceptable.

9. Procédé selon l'une quelconque des revendications 7 ou 8,
**caractérisé en ce que**
- la première unité de calcul (R1) remet à l'état initial l'unité déclencheuse (AE) en délivrant un premier signal de restauration déclencheur (sae1), lorsque la première unité de calcul (R1) détecte un nombre non acceptable d'impulsions pour une unité de temps dans le deuxième signal de connexion logique (clk23) et/ou
- la seconde unité de calcul (R2) remet à l'état initial l'unité déclencheuse (AE) en délivrant un second signal de restauration déclencheur (sae2) lorsque la seconde unité de calcul (R2) détecte un nombre non acceptable d'impulsions pour une unité de temps dans le premier signal de connexion logique (clk13).

10. Procédé selon l'une quelconque des revendications 7 à 9,
**caractérisé en ce que**
- sur la base des deux signaux d'horloge (clk1, clk2) de la première unité de calcul (R1) et de la seconde unité de calcul (R2) un troisième signal de connexion logique (clk12) est produit au moyen d'une troisième connexion logique (AND3),
- aussi bien la première unité de calcul (R1) que la seconde unité de calcul (R2) compte le nombre d'impulsions du troisième signal de connexion logique (clk12) durant une fenêtre temporelle,
- aussi bien la première unité de calcul (R1) que la seconde unité de calcul (R2) compare le nombre des impulsions comptées avec chaque fois une valeur de référence qui est conservée dans la mémoire de la première unité de calcul (R1) et/ou dans la mémoire de la seconde unité de calcul (R2),
- la première unité de calcul (R1) remet à l'état initial la seconde unité de calcul (R2) en délivrant un premier signal de restauration (sr1) lorsque la première unité de calcul (R1) détecte par comparaison avec la valeur de référence respective un nombre non acceptable d'impulsions pour une unité de temps dans le troisième signal de connexion logique (clk12), et
- la seconde unité de calcul (R2) remet à l'état initial la première unité de calcul (R1) en délivrant un second signal de restauration (sr2) lorsque la seconde unité de calcul (R2) détecte par comparaison avec la valeur de référence respective un nombre non acceptable d'impulsions pour une unité de temps dans le troisième signal de connexion logique (clk12).

11. Procédé selon l'une quelconque des revendications 8 à 10,
**caractérisé en ce que**
- un premier signal de type chien de garde (wd1) provenant d'une première sortie de surveillance (WD1) de la première unité de calcul (R1) est appliqué à une première entrée de surveillance (AE1) de l'unité déclencheuse (AE), et consécutivement
- une sortie de remise à l'état initial d'unité de calcul (SAE) de l'unité déclencheuse (AE) délivre un signal de remise à l'état initial d'unité de calcul (SAE) à la première entrée de restauration (RESET1) de la première unité de calcul (R1), lorsque le premier signal de type chien de garde (wd1) n'est pas acceptable,
et/ou
- un second signal de type chien de garde (wd2) provenant de la seconde sortie de surveillance (WD2) de la seconde unité de calcul (R2) est appliqué à une seconde entrée de surveillance (AE2) de l'unité déclencheuse (AE), et consécutivement
- la sortie de remise à l'état initial d'unité de calcul (SAE) de l'unité déclencheuse (AE) délivre le signal de remise à l'état initial d'unité de calcul (SAE) à la seconde entrée de restauration (RESET2) de la seconde unité de calcul (R2), lorsque le signal de type chien de garde (wd2) n'est pas acceptable.

12. Procédé selon l'une quelconque des revendications 7 à 11,
**caractérisé en ce que**
une des deux unités de calcul (R1, R2) de l'unité de commande d'un système de protection des passagers d'un véhicule automobile désactive au moins en partie le système de protection des passagers après une ou plusieurs remises à l'état initial de respectivement l'autre unité de calcul (R1, R2) ou de l'unité déclencheuse (AE) et/ou signale aux passagers du véhicule les dysfonctionnements de l'unité de calcul et la désactivation au moins en partie du système de protection des passagers.
